# EUROPÄISCHE PATENTANMELDUNG

(11) **EP 2 716 486 A1**
(43) Veröffentlichungstag der Anmeldung: **09.04.2014**
(21) Anmeldenummer: 12187424.2
(22) Anmeldetag: 05.10.2012
(51) Int. Cl.: B60K 35/00, B60N 3/00, B60R 11/00, G06Q 50/06, G07F 17/42, G07F 9/10

(54) **Innenstruktur in einem Verkehrsmittel zum Aufladen eines e-Tickets**

(71) Anmelder: Siemens Schweiz AG, 8047 Zürich (CH)
(72) Erfinder: Fischer, Michael, 8932 Mettmenstetten (CH)
(74) Vertreter: Fischer, Michael

(57) **Zusammenfassung**

Wegen der Problematik der auf einem e-Ticket im Kreditkartenformat zur Verfügung stehenden Energiemenge, die ja massgeblichst die erreichbare Betriebsdauer des e-Tickets begrenzt, liegt der vorliegenden Erfindung daher die Aufgabe zugrunde eine Lösung zur Bereitstellung genügend grosser Energiemengen auf dem e-Ticket anzugeben.

Diese Aufgabe wird in einer ersten erfindungsgemässen Version durch eine Innenstruktur in einem Verkehrsmittel zum Aufladen eines e-Tickets und ggfs. zum Anzeigen von den Zustand des e-Tickets repräsentierenden Daten gelöst, wobei die Innenstruktur umfassend eine an die Abmessungen des e-Tickets angepasste Aufnahme umfasst, die kontaktgestützte Lademittel aufweist, welche mit Ladekontakten des e-Tickets zusammenwirken.

Diese Aufgabe wird in einer zweiten erfindungsgemässen Version durch eine Innenstruktur in einem Verkehrsmittel zum Aufladen eines e-Tickets und ggfs. zum Anzeigen von den Zustand des e-Tickets repräsentierenden Daten gelöst, wobei die Innenstruktur eine an die Abmessungen des e-Tickets angepasste Aufnahme umfasst, die induktive Lademittel aufweist, welche mit induktiv koppelbaren Mitteln des e-Tickets zusammenwirken.

## Beschreibung

Die vorliegende Erfindung bezieht sich auf eine Innenstruktur in einem Verkehrsmittel zum Aufladen eines e-Tickets und ggfs. zum Anzeigen von den Zustand des e-Tickets repräsentierenden Daten.

Die generelle Funktionalität und die Anforderungen an ein e-Ticketing-System in einem Fahrzeug des öffentlichen Verkehrs kann beispielsweise den in [1] und [2] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff des (öffentlichen) Verkehrsmittels subsumiert.

Grundsätzlich werden im wesentlichen zwei verschiedene Ticketing-Systeme unterschieden:

### CiCo Check-in/Check-Out

Ein Fahrgast hält bewusst beim Betreten und beim Verlassen des Verkehrsmittels bzw. des Bahnsteig-Bereichs sein Billett kurz vor eines der zum Abrechnungssystem gehörenden Lesegeräte, korrekterweise «Sende-/Empfangseinheiten». Die Abfrage des Billetts - im folgenden stets e-Ticket genannt - erfolgt durch eine Nahdistanz-Funkverbindung, wie z.B.
- Proximity, ISO/IEC 14443,
   Reichweite bis 10cm;
- Vicinity, ISO/IEC 15693, 13.56 MHz;
   Reichweite 1 bis 1.5m.

Das CiCo eignet sich besonders für in sich abgeschlossene U-Bahn- und Metro-System, bei die Fahrgastströme relativ einfach durch Eingangs- und Ausgangsbereiche mit entsprechenden Einzelzugangsschranken gelenkt werden können. Bei anderen System-Architekturen, wie mehrgleisigen Bahnhöfen, ist diese Fahrgaststromlenkung nicht möglich. Aus diesem Grund ist daher eine Erfassung der Fahrgäste erst im Verkehrsmittel möglich. Die Erfassung beim Ein- und Auschecken führt aber zu einer Verlangsamung der Ausstiegs- und Zustiegsströme, was im Besonderen bei zeitlich enggesteckten Fahrplänen in Systemen mit hoher Zugdichte in nachteiliger Weise zu einer Destabilisierung des Fahrplans führt, und zwar besonders in den Zeitabschnitten der sogenannten Rush-Hour.

### BiBo Be-in/Be Out

Demgegenüber ist es bei komfortableren Systemen nur noch nötig, dass der Fahrgast sein elektronisches Billett mit sich führt: Das Billett wird per Funk innerhalb der befahrenen Streckenabschnitte automatisch von den in dem Transportmitteln, z.B. Fahrgastraum im Bus, Sitzbereich in einem Eisenbahnwaggon, Sitzbereich auf einem Schiff, installierten Leseeinheiten erfasst und die so gewonnenen Daten einem automatischen Abrechnungssystem zugeführt. Eine Interaktion des Benutzers ist nicht mehr notwendig. Diese System braucht daher auch keinen Check-Out-Vorgang. Somit lässt sich der Fahrgastfluss erheblich beschleunigen, insbesondere beim gleichzeitigen Ein-/Aussteigen der Passagiere.

Aus der Schrift EP 1 201 693 B1 [3] sind ein Verfahren und ein System zur Erfassung von elektronischen Billette (e-Ticket) bekannt. Dem in der Schrift [3] offenbarten System liegt folgende Funktionalität zugrunde: Aus Gründen der Energieautonomie befinden sich die Billette in einem Schlafzustand. Beim Eintritt in ein Verkehrsmittel werden die E-Tickets durch ein Nahfeld, z.B. 6.78Mhz, geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit. Durch das Protokoll können bei diesem System Fehlerfassung verhindert werden, so z.B.
- Parallelfahrt auf einem Velo oder durch Parallelfahrt zweier Züge
- Betrugsversuche durch temporäres Cachieren des E-Tickets in einem abschirmenden Behältnis, z.B. Alu-Koffer.

Das in EP 1 201 693 B1 [3] offenbarte System erlaubt die Detektion des Aufenthaltes beim Durchwandern eines Zuges mit der Granularität Waggon bzw. der Granularität Sende-/Empfangsbereich der in einem Transportmittel angeordneten Sende-/Empfangseinheit. Überlappungen sind dabei ausdrücklich möglich und erwünscht. Diese Überlappungen haben jedoch die Konsequenz, dass eine Zuordnung des Ortes eines E-Tickets zu einem bestimmten Ort innerhalb eines Verkehrsmittels nicht immer möglich ist, insbesondere dann, wenn in Doppelstockwaggons verschiedene Komfort- und damit auch Entgeltklassen angeboten werden.

Bei dem vorstehend genannten System war es zudem ein Ziel, das e-Ticket in Form und Grösse einer Kreditkarte zu realisieren, damit dieses ähnlich wie die in der Schweiz übliche Karte eines Generalabonnements in einem Portemonnaie aufbewahrt werden konnte. Zugleich sollte die auf dem e-Ticket gespeicherte Energie für eine durchschnittliche Betriebszeit von drei Jahren ausreichen. Da dieses System jedoch nie über den Status von Versuchsprojekten mit Kartendicken von etwa 3 mm hinauskam, ist es daher fraglich, ob diese Randbedingungen besonders hinsichtlich der durchschnittlichen Betriebsdauer tatsächlich erreicht worden wären.

Obwohl beispielsweise für die Einführung eines elektronischen Ticket-Systems in der Schweiz hinter beiden System-Typen noch Fragezeichen stehen, scheint sich derzeit ein gewisser Vorzug für entsprechende BiBo-Systeme abzuzeichnen, weil ein Bibo-System für den Nutzer (Fahrgast) höchst komfortabel ist. Anders als bei einem CiCo-System bedarf es bei einem Bibo-System keinerlei Aktion des Nutzers beim Zu- und Aussteigen (vorausgesetzt, dass der Nutzer sein e-Ticket mit sich führt).

Wegen der weiter oben bereits angesprochenen Problematik der auf einem e-Ticket im Kreditkartenformat zur Verfügung stehenden Energiemenge, die ja massgeblichst die erreichbare Betriebsdauer des e-Tickets begrenzt, liegt der vorliegenden Erfindung daher die Aufgabe zugrunde eine Lösung zur Bereitstellung genügend grosser Energiemengen auf dem e-Ticket anzugeben. Dabei ist als Randbedingung natürlich immer auch der in den Verkehrsmitteln zu integrierende Systemaufwand zu berücksichtigen, den die Betreiber der Verkehrsmittel verständlicherweise möglichst gering halten wollen.

Diese Aufgabe wird in einer ersten erfindungsgemässen Version durch eine Innenstruktur in einem Verkehrsmittel zum Aufladen eines e-Tickets und ggfs. zum Anzeigen von den Zustand des e-Tickets repräsentierenden Daten gelöst, wobei die Innenstruktur umfassend eine an die Abmessungen des e-Tickets angepasste Aufnahme umfasst, die kontaktgestützte Lademittel aufweist, welche mit Ladekontakten des e-Tickets zusammenwirken.

Diese Aufgabe wird in einer zweiten erfindungsgemässen Version durch eine Innenstruktur in einem Verkehrsmittel zum Aufladen eines e-Tickets und ggfs. zum Anzeigen von den Zustand des e-Tickets repräsentierenden Daten gelöst, wobei die Innenstruktur eine an die Abmessungen des e-Tickets angepasste Aufnahme umfasst, die induktive Lademittel aufweist, welche mit induktiv koppelbaren Mitteln des e-Tickets zusammenwirken.

Auf diese Weise ist es einem Nutzer des Verkehrsmittels während der Fahrt erlaubt, sein e-Ticket aufzuladen und so langfristig funktionsfähig zu halten. Der Betreiber ist hinsichtlich des Installationsaufwandes in dem Verkehrsmittel nicht besonders gefordert, weil angesichts der geringen Ladewiederholraten nur wenige Innenstrukturen pro Verkehrsmittel einzurichten sind. So kann es als ausreichend angesehen werden, wenn etwa für jeden zehnten Passagier bei Vollbesetzung eine Lademöglichkeit besteht.

In einer vorteilhaften Ausgestaltung der vorliegenden Erfindung kann die Innenstruktur als Bedienerterminal ausgestaltet sein, welches über eine Anzahl von Aufnahmen und eine Anzahl von Displays zur Anzeige zumindest eines Teils der Daten verfügt. Ein derartiges Bedienerterminal kann beispielsweise im Format eines Papierfahrscheinentwerters, so wie diese häufig in Bussen des öffentlichen Verkehrs zu finden sind, ausgestaltet sein.

Eine für den Nutzer besonders komfortable Lademöglichkeit kann geschaffen werden, wenn die Innenstruktur eine Armlehne eines Passagiersitzes ist und die Aufnahme darin als Einlegeschale ausgeformt ist. Während der Passagier somit auf seinem Sitzplatz sitzt, kann er sein e-Ticket in die Aufnahme einlegen und aufladen. Besonders bei der Ausgestaltung dieser Lademöglichkeit in Zügen, wo Sitzplatzgruppen mit Tischen und/oder kleinen unter dem Fenster angeordneten Tischchen vorhanden sind, kann die Innenstruktur weiter auch als ein Ablagetisch ausgebildet sein, in welche die Aufnahme als Einlegeschale ausgeformt ist.

Um einen energiesparenden Betrieb der Innenstruktur zu ermöglichen, kann die Aufnahme ein Detektionselement für die Anwesenheit eines e-Tickets aufweisen, wobei die Lademittel bei der detektierten Präsenz eines e-Tickets eingeschaltet und ansonsten ausgeschaltet sind. Somit triggert quasi das korrekte Einbringen des e-Tickets in die Aufnahme den Ladevorgang. In einer vorteilhaften Ausgestaltung dieses Merkmals der vorliegenden Erfindung kann das Detektionselement dabei prüfen, ob ein bestimmtes den e-Tickets eigenes Kennzeichen, vorzugsweise ein Feld eines Magnetelements und/oder ein kapazitiv wirksames Element, erfüllt ist. Ebenso kann auf das Anliegen der Ladekontakte des e-Tickets entsprechend reagiert werden. Ein den e-Ticket eigenes Kennzeichen kann aber auch eine Einkerbung am Ticketrand oder ein sonstiges topologisches Merkmal sein.

Damit sich der Benutzer von dem korrekten Ablauf des Lagevorgangs versichern kann, kann in einer weiteren vorteilhaften Ausgestaltung der vorliegenden Erfindung ein optisches Anzeigeelement vorgesehen sein, das einem Benutzer die Aktivierung des Ladevorgangs für ein in der Aufnahme aufgenommenes e-Ticket anzeigt.

Bevorzugte Ausführungsbeispiele der vorliegenden Erfindung werden nachfolgend anhand der Zeichnung näher erläutert. Dabei zeigen:

Figur 1 in schematischer Darstellung ein in einem Verkehrsmittel angeordnetes Bedienerterminal mit Ladevorrichtungen;

Figur 2 in schematischer Darstellung einen Sitzplatz in einem Eisenbahnwaggon mit in eine Armlehne integrierte Ladevorrichtung; und

Figur 3 in schematischer Darstellung einen vergrösserten Ausschnitt aus der Armlehne gemäss Figur 2.

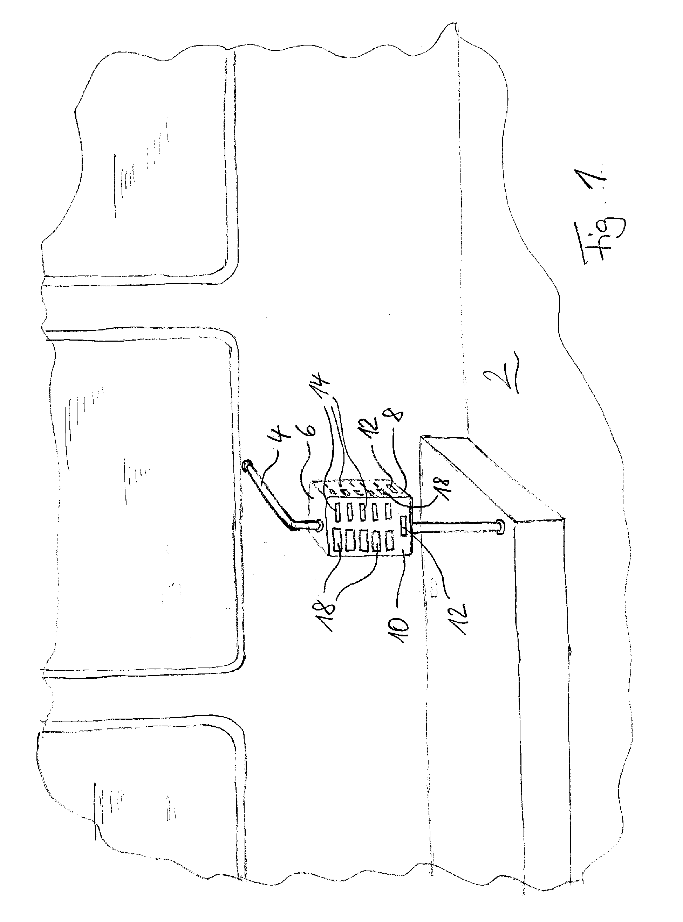

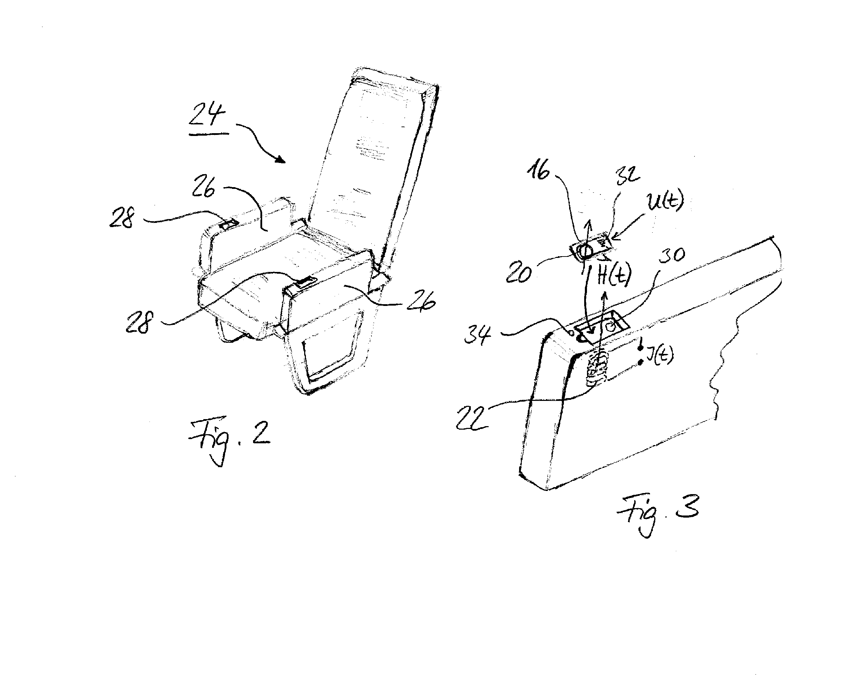

Die Figur 1 zeigt in schematischer Darstellung einen Ausschnitt aus einer Stehplatzplattform 2 in einem Verkehrsmittel, beispielweise in einem Autobus. An einer Haltestange 4 ist ein Bedienerterminal 6 angeordnet, das von zwei Seiten 8, 10 bedient werden kann. Neben einem Einführschlitz 12 zur Entwertung von Papierfahrscheinen verfügt das Bedienerterminal auch über Aufnahmeschächte 14 für e-Tickets 16 (vgl. Figur 3) sowie über jeweils einem Aufnahmeschacht 14 zugeordnete Displayelemente 18. Das e-Ticket 16 verfügt über induktive Lademittel in Form einer Spule 20, die es erlauben bei Durchdringung der Spule 20 von einem Wechselmagnetfeld H(t), das mit einer innenstrukturseitigen Ladespule 22 (nur am Beispiel von Figur 3 gezeigt) erzeugt wird, auf dem e-Ticket 16 eine Induktionsspannung U(t) zu induzieren, die zum Aufladen von e-Ticket-seitigen hier nicht weiter dargestellten Speicherelementen genutzt wird.

Ein Fahrgast kann daher sein e-Ticket 16 während der Fahrt des Autobusses in einen der Aufnahmeschächte 14 des Bedienerterminals einführen und sein e-Ticket 16 aufladen und sich zusätzlich wichtige das e-Ticket 16 betreffende Daten anzeigen lassen, wie beispielsweise den Ladezustand oder den Ladefortschritt. Das e-Ticket 16 weist in hier nicht weiter dargestellter Weise ein Porträt des Inhabers auf, das auch bei in den Aufnahmeschacht 14 eingeführtem e-Ticket 16 noch von aussen erkennbar ist, damit der Inhaber sein e-Ticket 16 leichter wieder auffinden kann und auch das richtige e-Ticket 16 wieder dem Bedienerterminal 6 entnimmt.

Bei der in Figur 2 gezeigten schematischen Darstellung eines Sitzplatzes 24 in einem Eisenbahnwaggon erfolgt das Aufladen des e-Tickets 16 mit einem gegenüber Figur 1 erhöhten Komfort für den Benutzer. In den Armlehnen 26 des Sitzplatzes 24 sind Ladevorrichtungen integriert, deren Aufnahmen 28 als kleine Vertiefungen in die Armlehnen 26 eingeformt sind. Unterhalb der Vertiefungen 28 sind die Magnetspule 22 zum Erzeugen des die Spannung U(t) auf dem e-Ticket 16 erzeugenden Wechselmagnetfeld H(t) sowie ein kreisförmig angedeuteter Magnetsensor 30 (vgl. Figur 3) angeordnet. Erst wenn dieser Magnetsensor 30 die Präsenz eines kleinen auf dem e-Ticket 16 angeordneten Permanentmagneten 32 detektiert, wird die Spule 22 mit einem Wechselstrom I(t) beaufschlagt. Die Ladevorrichtung schaltet sich daher erst dann ein, wenn das e-Ticket 16 richtig in die formschlüssig geformte Vertiefung 28 eingelegt ist. Mit der Entfernung des e-Tickets 16 aus der Vertiefung 28 schaltet die Ladevorrichtung die Stromzufuhr zur Spule 22 wieder aus.

Neben der als Vertiefung ausgeformten Aufnahme 28 ist eine LED 34 angeordnet, die aufleuchtet, wenn das e-Ticket 16 korrekt eingelegt und aufgeladen wird. Aus Platzgründen ist hier nur ein Magnetsensor 30 dargestellt. Selbstverständlich könnte auch ein zweiter Magnetsensor vorgesehen sein, damit das e-Ticket 16 richtungsunabhängig in die Aufnahme 28 eingelegt werden kann. Alternativ könnten der Magnetsensor 30 und der Permanentmagnet 32 auch jeweils mittig angeordnet sein, um ein richtungsunabhängiges Funktionieren der Ladeeinrichtung zu gewährleisten.

In einem Eisenbahnwaggon mit beispielsweise 60 Sitzplätzen können beispielsweise rund 10% der Sitzplätze 24 mit zumindest einer Aufnahme 28 ausgestaltet sein. Ebenso könnten auch die Tische, die bei Sitzgruppen von vier Sitzplätzen in der Mitte und/oder unter dem Fenster angeordnet sind, über derartige Aufnahmen 28 verfügen. Möglicherweise muss es hier der etatmässige Betrieb zeigen, wie viele Ladevorrichtungen tatsächlich bereitzustellen sein müssen. Möglichweise lässt sich deren Zahl noch erheblich reduzieren, wenn sich nur die Fahrgäste mit Ladeabsicht auch an einem so ausgestatteten Sitzplatz 24 oder Tisch niederlassen.

Neben der hier beschriebenen induktiven Ladevorrichtung könnten in der Aufnahme 28 auch Ladekontakte vorgesehen sein, die mit am e-Ticket 16 angebrachten Ladekontakten zusammenwirken, wenn das e-Ticket korrekt in Aufnahme 28 bzw. 14 eingeführt worden ist. Die Detektion des e-Tickets 16 mit einem Magnetsensor 30 oder ein ähnlichem Sensor könnte dann auch entfallen, wenn das Schliessen der Ladekontakte als Hinweis auf die korrekte Einführung des e-Tickets 16 gewertet wird und die Ladevorrichtung dann einschaltet.

### Liste der zitierten Dokumente

[1] «E-Ticketing»
   Siemens Schweiz AG, Industry Sector, Mobility Division, Rail Automation
   www.litra.ch/download.php?file=dcs/users/2/3 20110316 M F dt.pdf
   und
   http://www.litra.ch/dcs/users/2/3 20110316 MF dt.pdf
[2] «Inhalt und Struktur der Spezifikationen/Kundenschnittstelle und Zertifizierung in der VDV-Kernapplikation» Präsentation von Dipl.-Ing. Elke Fischer
   VDV-KERNAPPLIKATIONS GmbH & Co. KG
   http://www.eticket-deutschland.de/
[3] EP 1 201 693 B1
   «Verfahren und System zur Registrierung von Billetten»

## Patentansprüche

1. Innenstruktur (6, 24) in einem Verkehrsmittel zum Aufladen eines e-Tickets (16) und ggfs. zum Anzeigen von den Zustand des e-Tickets (16) repräsentierenden Daten, umfassend eine an die Abmessungen des e-Tickets angepasste Aufnahme (14, 28), die kontaktgestützte Lademittel aufweist, die mit Ladekontakten des e-Tickets zusammenwirken.

2. Innenstruktur (6, 24) in einem Verkehrsmittel zum Aufladen eines e-Tickets (16) und ggfs. zum Anzeigen von den Zustand des e-Tickets (16) repräsentierenden Daten, umfassend eine an die Abmessungen des e-Tickets (16) angepasste Aufnahme (14, 28), die induktive Lademittel (22) aufweist, die mit induktiv koppelbaren Mitteln (20) des e-Tickets (16) zusammenwirken.

3. Innenstruktur (6, 24) nach Anspruch 1 oder 2,
**dadurch gekennzeichnet, dass**
die Innenstruktur als Bedienerterminal (6) ausgestaltet ist, welches über eine Anzahl von Aufnahmen (14) und eine Anzahl von Displays (18) zur Anzeige zumindest eines Teils der Daten verfügt.

4. Innenstruktur (6, 24) nach Anspruch 1 oder 2,
**dadurch gekennzeichnet, dass**
die Innenstruktur eine Armlehne (26) eines Passagiersitzes (24) ist und die Aufnahme als Einlegeschale (28) ausgeformt ist.

5. Innenstruktur nach Anspruch 1 oder 2,
**dadurch gekennzeichnet, dass**
die Innenstruktur ein Ablagetisch ist und die Aufnahme als Einlegeschale ausgeformt ist.

6. Innenstruktur nach einem der Ansprüche 1 bis 5,
**dadurch gekennzeichnet, dass**
die Aufnahme (28) ein Detektionselement (30) für die Anwesenheit eines e-Tickets (16) aufweist, wobei die Lademittel bei der detektierten Präsenz eines e-Tickets (16) eingeschaltet und ansonsten ausgeschaltet sind.

7. Innenstruktur nach Anspruch 6,
**dadurch gekennzeichnet, dass**
das Detektionselement (30) prüft, ob ein bestimmtes den e-Tickets (16) eigenes Kennzeichen, vorzugsweise ein Feld eines Magnetelements (32) und/oder ein kapazitiv wirksames Element, erfüllt ist.

8. Innenstruktur nach einem der vorangehenden Ansprüche, **dadurch gekennzeichnet, dass**
ein optisches Anzeigeelement (34) vorgesehen ist, das einem Benutzer die Aktivierung des Ladevorgangs für ein in der Aufnahme (28) aufgenommenes e-Ticket (16) anzeigt.
